# EUROPEAN PATENT APPLICATION

(11) **EP 3 940 644 A1**
(43) Date of publication of application: **19.01.2022**
(21) Application number: 20185965.9
(22) Date of filing: 15.07.2020
(51) Int. Cl.: G06T 7/73

(54) **MULTI-IMAGE CAPTURING OF DISTRIBUTED OPTICALLY DETECTABLE STRUCTURES**

(71) Applicant: OptiNav Sp. z o.o., 76-200 Slupsk (PL)
(72) Inventor: Skwarek, Pawel, 76200 Slupsk (PL); Smigielski, Arkadiusz, 76-251 Kobylnica (PL)
(74) Representative: Patentanwälte Bressel und Partner mbB

(57) **Abstract**

The invention concerns a system (10) and a method for capturing optically detectable structures (11-16) which are spatially separated from one another, the method comprising:
a) determining a relative arrangement of a second structure (12) to a first structure (11) based on a first image (1) depicting the first structure (11) and the second structure (12);
b) determining coordinates of the second structure (12) based on said relative arrangement;
c) capturing a second image (2) depicting the second structure (12) and a third structure (13), but not the first structure (11);
d) determining a relative arrangement of said third structure (13) to the second structure (12) based on said second image (2);
e) determining coordinates of the third structure (13) based on said relative arrangement.

## Description

The invention relates to the optical capturing (e.g. by photographing or general imaging techniques) of optically detectable structures, such as optical markers or optical targets. The structures may be one-dimensional, two-dimensional or three-dimensional. They are spatially distributed with respect to one another, i.e. are spaced apart from one another. In particular, they may be distributed on or, differently put, across a (single-part or multi-part) object that is to be measured. Said measurement may in particular include determining spatial coordinates of said object to e.g. perform quality checks and/or determine values of test parameters concerning said object.

Optically detecting structures, such as markers or targets, is a known technique for determining spatial coordinates of an object to which the structures are attached. This may be used for tracking purposes (e.g. to continuously determine respective coordinates of a moving object, such as a surgical tool) or, more generally, for determining coordinates of a stationary object, such as an industrially produced workpiece.

In this context, it is also known to determine the full spatial coordinates of single structures with respect to all six degrees of freedom (6-DOF), that is all three translational and all three rotational degrees of freedom. Reference is made to EP 3 594 903 A1 showing examples of structures (in particular of two-dimensional markers) that can be used for a respective 6-DOF determination, even based on only a single camera image thereof. The teachings of this reference are fully incorporated herein by reference, in particular with respect to the types of optically detected structures and the determination of their 6-DOF. This concerns in particular the teachings connected to figure 3 and the marker shown in e.g. figure 6 as well as the parameters determined according to claim 1 of this reference.

Further reference is made to US 2017/0258531 A1 which similarly discloses an optically detectable marker, in particular a 2D-marker, based on which a 3D position of an object can be determined. Again, the type of marker as well as its analysis in a detected image, as e.g. explained throughout [0048-0090], are fully incorporated herein by reference.

Both the above teachings focus on capturing optically detectable structures that are close to one another, e.g. due to being attached to a common surgical tool or a general hand-operated tool. Such tools are positioned within a defined workspace of limited size. This workspace can be easily surveyed with a typically stationary image detection system, such as a camera system.

However, these solutions are of limited efficiency when trying to capture structures that are randomly and e.g. not predictably distributed in a workspace (e.g. by not being attached to a known tool, but rather to a complex three-dimensional object). This may result in a non-defined workspace or in a workspace having a complex three-dimensional shape. Also, this may require suitably and even individually adjusting the image detection system to said shape, so that the object can be fully captured from all relevant angles. This requires time, effort and experience and may increase the costs in case the overall number of stationary cameras must be increased.

Similarly, these solutions are of limited efficiency when trying to capture large objects. On such objects, the structures/markers have to be distributed at considerable distances from one another (e.g. at distances that amount to more than half a meter, more than 1 m or even more than 5 m). This again leads to a non-defined or complex workspace which, moreover, is of considerable size. Such a workspace cannot be efficiently covered with known standard image detecting systems for tracking and/or capturing optical markers/targets.

The present solution is thus directed at improving measurements based on optically detecting structures, such as e.g. markers and targets, which are distributed on an object in a spatially separated manner.

This object is solved by the subject matter of the attached independent claims. Further advantageous embodiments are defined in the dependent claims. Any of the above explanations, features and embodiments may also apply to or be included in the present solution, if not mentioned or evident otherwise.

According to a general concept of the present disclosure, problems arising from the enlarged workspace due to optically detectable structures (in the following also merely referred to as optical structures) being spatially separated from one another, e.g. due to being distributed across a large three-dimensional object, are overcome by capturing multiple images. In each captured image, one structure may have known coordinates with respect to a reference coordinate system. This structure may thus act as a reference for a further structure contained (i.e. depicted) in said image. Specifically, a relative arrangement, in particular a relative position and/or relative orientation, between said further structure and the structure having known coordinates may be determined. This may then be employed to also determine coordinates of said further structure in the reference coordinate system or a different goal coordinate system

In particular, a method for capturing optically detectable structures (e.g. two-dimensional fiducial markers as disclosed herein, the terms structures and marker being used interchangeably in the following) which are spatially separated from one another, the method comprising:
as an optional initial measure: receiving or determining coordinates of a first structure (e.g. a first marker), preferably with respect to all six spatial degrees of freedom and/or in a reference coordinate system e.g. associated with, defined by and/or encoded within the first structure or an image capturing device;
a) determining a relative arrangement of a second structure (e.g. a second marker) to the first structure based on a first image (or picture) depicting the first structure and the second structure, the relative arrangement being preferably determined with respect to all six spatial degrees of freedom;
b) determining coordinates of the second structure based on said relative arrangement, preferably with respect to all six spatial degrees of freedom and/or in said reference coordinate system;
c) capturing a further (second) image depicting the second structure and a third structure, but preferably not the first structure;
d) determining a relative arrangement of said third structure to the second structure based on said further image, preferably with respect to all six spatial degrees of freedom and/or in a coordinate system that is at least one of associated with, defined by and encoded with the second structure;
e) determining coordinates of the third structure based on said relative arrangement, preferably with respect to all six spatial degrees of freedom and/or in a reference coordinate system, e.g. the one of the first or second structure.

The invention is not limited to a certain number of structures. In particular, a large number of at least ten or at least twenty structures may be distributed across an object and may be captured with a plurality of images.

Preferably, each image includes at least one (and preferably more than one) structure that is also included in another image. In said other image, a further structure is preferably included whose relative arrangement to a reference coordinate system is already known. This enables establishing a link between said reference coordinate system and said at least one structure via said other image. For a subsequent image also containing said at least one structure, this link may again be established and/or may be used to link any further structures contained in the subsequent image to said reference coordinate system as well. The latter may include determining a relative arrangement between the further structure and said at least one structure.

The relative arrangements may be expressed as vectors and preferably as six dimensional vectors. Accordingly, any relative arrangement preferably includes both of a relative position and relative orientation, i.e. may be a 6-DOF relative arrangement. As previously discussed, each structure may include (or define) a coordinate system defining its six degrees of freedom (6-DOF). A relative arrangement of structures may thus express how a structure and in particular a coordinate system of said structure (i.e. associated therewith, defined by and encoded within said structure) is positioned/oriented with respect to a respective coordinate system of a further structure.

Coordinates of the first structure in a preferred reference coordinate system may be known (e.g. may have been determined in advance). Determining coordinates may generally be equivalent to determining the orientation/position of a structure with respect to its six degrees of freedom (6-DOF). In case of the first structure, its six degrees of freedom may be set to zero or to another predetermined reference value, when its associated coordinate system is used as a (global) reference coordinate system for a plurality of further structures. Alternatively, its six degrees of freedom may be determined with respect to a camera coordinate system that is used as a reference coordinate system.

Coordinates (e.g. values for the up to six degrees of freedom) may be determined by means of any of the teachings referenced above and specifically by image evaluation techniques disclosed therein. Generally, this step may be implemented by a system discussed below and specifically by a computing unit thereof.

The coordinates of the further structures may be determined by way of the relative arrangement with respect to the coordinate system of another structure (preferably one whose relative arrangement to the reference coordinate system is at least indirectly defined).

As an outcome of the solution disclosed herein, the coordinates, preferably with respect to all six degrees of freedom (6-DOF), of each structure may be determined with respect to a common reference coordinate system. This enables e.g. evaluating or determining arrangements of any of the structures, without said structures being necessarily included in a common image (e.g. between the first and third structure). Likewise, test characteristics, e.g. defined geometric parameters, of the object may thus be determined, said characteristics being computed based on a plurality of structures and their coordinates, even though said structures are not necessarily included in a common image.

Differently put, even though a plurality of images is used for capturing the spatially distributed structures, information are determined and/or captured alongside which enable reconstructing (e.g. global) arrangements of these structures with respect to one another and/or general poses (i.e. positions and orientations) in a common reference coordinate system. Specifically, the solution enables determining relative arrangements of said structures, wherein at least one of the structures (and in particular its 6-DOF) is/are defined in and/or is directly or unambiguously linked to a reference coordinate system. Specifically, the determined relative arrangements may establish a link to said reference coordinate system. Accordingly, the 6-DOF of any of the structures may be determined in said reference coordinate system via said relative arrangements.

A structure, whose 6-DOF in the reference coordinate system can be computed and/or reconstructed based on the above-discussed established link in from of (e.g. a chain of) relative arrangements to at least one intermediate further structure may be referred to as being indirectly linked to the reference coordinate system. Differently speaking, its position/orientation in said reference coordinate system is at least indirectly defined by its relative arrangement to at least one further structure, whose position/orientation in said reference coordinate system is known or defined.

For example, for any structure whose relative arrangement to a further structure is defined, its coordinates and specifically 6-DOF in a coordinate system of said further structure may be known or derivable in a straightforward manner. If the 6-DOF of said further structure and specifically of its coordinate system are known with respect to the reference coordinate system (or may be defined or determined via an indirect link of the above kind), the coordinates and specifically 6-DOF of said structure may be computed in said reference coordinate system via standard coordinate transformations.

This way, determining coordinates and in particular six degrees of freedom of any of the structures in a desired reference coordinate system can be achieved even though only a limited image size may be available and/or a plurality of single images are present. This also means that the overall measurement system (and in particular an image capturing device thereof) as well as measurement procedure can be simplified. For example, instead of having to capture the whole object and all of the detectable structures distributed thereon with high resolution in a single image, a plurality of images can be captured with very limited restrictions for moving the image capturing device in between capturing images.

Note that references such as "first, second, third" do not necessarily imply a respective positioning or order in an overall measurement process. For example, when more than three structures and/or images are captured during a measurement process, any of three preferably subsequently captured images and/or structures may be labelled as "first, second, third" in the sense of the claims. This may apply even though the first image may, in an actual time sequence of image capturing, actually be e.g. the fifth image. Differently speaking, any three (preferably subsequently) captured structures and/or images may be first to third structures/images in the sense of the claims.

According to a further embodiment, the method includes:
- capturing further images, each image depicting at least one structure (e.g. the third structure) whose relative arrangement to the first structure is at least indirectly defined (e.g. via the links discussed above, such as a relative arrangement to the second structure) as well as depicting at least one other structure (e.g. a fourth structure and/or a structure whose relative arrangement to the first structure is preferably not yet known);
- determining a relative arrangement of said further structure to said at least one structure;
- determining coordinates of the further structure based on said relative arrangement.

Again, said coordinates are preferably determined in a reference coordinate system (e.g. of the at least one structure) and /or are preferably coordinates relating to all 6-DOF. The above aspects underlines that the number of structures is not limited. It further underlines that the present solution enables determining coordinates of a structure in a desired reference coordinate system even for a large number of structures.

According to a preferred embodiment, at least the coordinates of the first structure (and preferably of all structures) are determined in a predetermined reference coordinate system. Alternatively, they may be at least indirectly defined with respect to a predetermined reference coordinate system. For example, the first marker's relative arrangement to a further marker may be known, said further marker's coordinates in said reference coordinate system being known as well. This way, a link as discussed above between the first marker and the reference coordinate system may be defined, said link being indirect as it is based on at least one further (intermediate) marker.

Specifically, the reference coordinate system may be one of the following:
- a coordinate system associated with the first structure (e.g. encoded thereby);
- a coordinate system associated with an image capturing system used for capturing the images;
- a coordinate system associated with an optically detectable reference structure, wherein an image is captured depicting said reference structure and the first structure (or any other structure captured with the further images) for determining the coordinates of the first structure in the reference coordinate system.

According to a further aspect, an image capturing system may be provided having a least one image capturing device (e.g. a camera and preferably a digital camera) that is movable relative to the optically detectable structures. Said structures and/or the object, to the contrary, are preferably stationary. This enables an efficient and precise capturing of the markers without having to move the possibly large and heavy object.

In this context, the image capturing device and the spatially separated optically detectable structures may be arranged relative to one another, such that not all structures can be captured with a single image; and the image capturing system may be moved relative to the optically detectable structures, thereby capturing a plurality of images, so that each structure is depicted in at least one image.

This enables gathering images of each structure with a sufficient resolution. Also, this way with the capturing of images may be specifically adapted to certain structures (e.g. by choosing specific image angles relative to the object for certain structures).

As a general aspect, each or at least the majority of structures that are used as a reference for determining an arrangement of any further structure relative thereto may be depicted in at least two images. This ensures that the above-discussed indirect links can reliably be established between the further structures and the reference coordinate system with limited efforts.

In a further development, an additional marker is captured with (or in) the first image, and an arrangement of the third marker is also determined relative to said additional marker. Preferably, coordinates of said third marker are determined also based on said relative arrangement to the additional marker. Accordingly, said coordinates may be redundantly determined based on relative arrangements to both of the second and the additional marker.

As further detailed in the discussion of the figures, this may be used to perform plausibility checks and/or to determine coordinates of the third marker with an increased precision based on both of the redundantly determined coordinates (e.g. by averaging them).

In general, the invention thus contemplates to use a plurality of structures as a reference for a further structure by determining relative arrangements of said further structure to each of said plurality of structures. Based on each of said relative arrangements, coordinates of said further structure can be determined redundantly.

The invention also relates to a system for capturing optically detectable structures, the system comprising:
- an arrangement of spatially separated optically detectable structures;
- an image capturing system that is configured to capture a first image of the arrangement depicting a first structure and at least a second structure and to capture a further (second) image depicting the second structure and a third structure, but not the first structure;
- a computing unit (as an option configured to receive or determine coordinates of the first structure) and configured to determine a relative arrangement of said second structure to the first structure based on said first image and further configured to determine coordinates of the second structure based on said relative arrangement;
- the computer unit also being configured to determine a relative arrangement of said third structure to the second structure based on said further image and to determine coordinates of the third structure based on said relative arrangement.

The system may be configured to perform a method according to any of the aspects disclosed herein. For doing so, it may comprise any further features or developments. Any of the explanations and developments of the above method features also apply to the related system features.

According to a further aspect, the system is further marked by:
- the image capturing system being configured to capture further images, each image depicting at least one further structure whose relative arrangement to the first structure is at least indirectly defined as well as depicting at least one other structure;
- the computing unit being configured to determine a relative arrangement of said other structure to said further structure and to determine coordinates of the other structure based on said relative arrangement.

According to a further aspect, the system is further marked by at least the coordinates of the first structure being determined in a predetermined reference coordinate system, and preferably by the reference coordinate system being one of the following:
- a coordinate system associated with the first structure;
- a coordinate system associated with an image capturing system used for capturing the images;
- a coordinate system associated with an optically detectable reference structure, wherein an image is captured depicting said reference structure and the first structure for determining the coordinates of the first structure in the reference coordinate system.

According to a further aspect, the system is further marked by the image capturing system having at least one image capturing device that is movable relative to the optically detectable structures.

According to a further aspect, the system is further marked by the image capturing device and the spatially separated optically detectable structures being arrangeable relative to one another, such that not all structures can be captured with a single image; and the image capturing device being movable relative to the optically detectable structures, thereby capturing a plurality of images, so that each structure is depicted in at least one image.

According to a further aspect, the system is further marked by each or at least the majority of structures that are used as a reference for determining an arrangement of any further structure relative thereto being depicted in at least two images.

According to a further aspect, the system is further marked by the image capturing system being configured to capture an additional marker with the first image, and the computing unit being configured to determine an arrangement of the third marker also relative to said additional marker and to also (i.e. redundantly) determine coordinates of said third marker based on said relative arrangement.

Embodiments of the present solution will be discussed with respect to the following schematic figures.
- Figure 1: shows an example of a system according to an embodiment of the present invention, said system carrying out a method according to an embodiment of the present invention.
- Figure 2: depicts a flow diagram of the method performed by the system of figure 1.

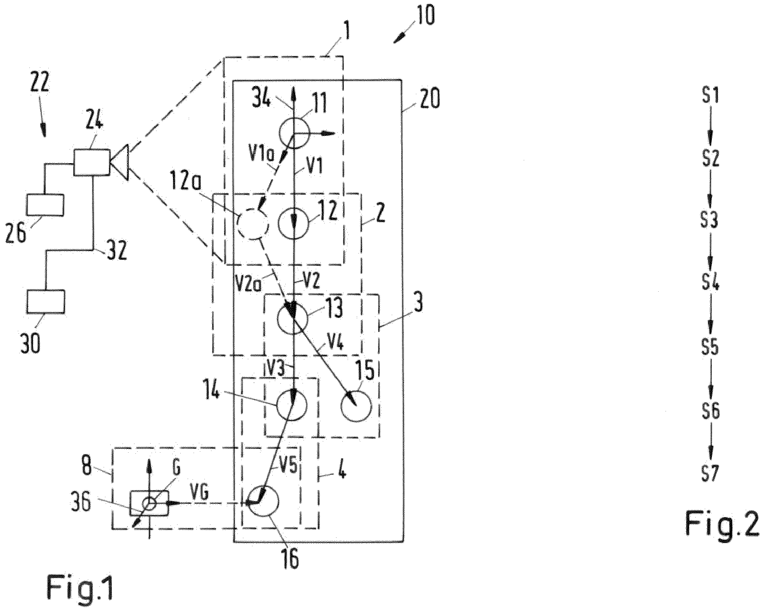

Figure 1 shows an exemplary system 10 according to an embodiment of the invention. The system 10 comprises a plurality of optically detectable structures in form of markers 11-16. The markers 11-16 are two-dimensional and, as a mere example, are circular. They may be configured according to any of the markers disclosed in EP 3 594 903 A1 and may generally be so-called fiducial markers.

The markers 11-16 are distributed across a three-dimensional object 20. The relation of the depicted sizes of the markers 11-16 and the object 20 is merely schematic. Generally, the object 20 may be considerably larger than the markers 11-16, e.g. at least one dimension of the object 20 being more than 100 times larger than a diameter of the markers 11-16.

The exact size, shape and type of object 20 is not essential for the present solution. Nonetheless, the present solution is particularly advantageous when being applied to large objects which measure e.g. more than 1 m, more than 5 m or even more than 10 m in at least one spatial dimension.

In one example, the object 20 is an industrially produced workpiece, such as a large welded or assembled structure. One example (even though it does not match the depicted one) is a rotor or rotor blade of a wind turbine. Another example is a building and in particular a frame structure of the building that is to be measured.

Even though this is not specifically illustrated, the markers 11-16 may be located at different distances from the viewer (in particular at different depths, i.e. different distances form the image plane). Also they may be tilted differently relative to the viewer and the image plane (e.g. being tilted about a vertical axis in Fig. 1).

Each marker 11-16 comprises characteristic features which allow for determining six degrees of freedom thereof, even when captured with only a single image. More precisely, a marker's 11-16 pose (i.e. position and orientation and thus its 6-DOF) may be uniquely defined by the three-dimensional coordinates of its center point (or another predefined reference point) as well as a location of two axes defining a plane in which the marker 11-16 extends. A third axes may extend orthogonally to said plane. Differently put, each marker 11-16 may comprise, define or encode an individual three-dimensional coordinate system which is centered at its center point with the axes oriented as discussed above.

Note that each of the marker 11-16 could also be replaced by an arrangement of single markers (not depicted). Such an arrangement (or set or subset) of single markers can be used to determine threedimensional coordinates of the space/volume enclosed by the arrangement of markers. Again, each marker of such an arrangement of markers may comprise detectable characteristics uniquely defining its 6-DOF. The 6-DOF of the arrangement's markers may be used to e.g. determine the 6-DOF of a geometric center point of the space/volume enclosed by a set of e.g. three markers.

By thus increasing the number of detected markers based on which the final 6-DOF of a certain region of the object is determined, the accuracy can be improved e.g. compared to deriving such 6-DOF determination based on only a single marker detection. In particular, this may help to reduce the error in determining the coordinate system that occurs on subsequent images.

The system 10 further comprises an image capturing system 22. The image capturing system 22 has at least one camera 24 and preferably only one camera 24. The camera 24 is an image capturing device. It is attached to a movement device 26. The specifics of said movement device 26 are not essential for the disclosed solution. Yet, the movement device 26 advantageously allows for actively moving the camera 24 to a preferably stationary (large) object 20. Thus, the camera 24 can be moved into suitable positions for capturing each of the markers 11-16 by taking a multitude of images which contain (i.e. depict) the object 20.

Especially when the object 20 is a building (but not limited thereto), the movement device 26 can be a drone or generally a device capable of flying (e.g. a remote-controlled or radio controlled unmanned aircraft). Other examples of a movement device 26 are an industrial robot (in particular a six-axis jointed-arm robot), a crane or a lift apparatus. On the other hand, the movement device 26 is not mandatory and the camera 24 may also be manually moved, e.g. by being placed at different positions relative to the object 20.

The system 10 further comprises a computing unit 30. Said computing unit 30 may be a general purpose computer, such as a PC, or may be a specialized computer. The computing unit 30 comprises a processing unit and a storage unit. On the latter, an appropriate computer program is stored which, when executed by the processing unit, enables any of the image processing and coordinate determination measures discussed herein.

The computing unit 30 is connected to the camera 24 by a wire-bound or wireless communication path 32. The camera 24 is configured to send acquired image data (e.g. image files of each of the images 1-5 discussed in the following) to the computing unit 30 via said communication path 32.

In the depicted state and position, the camera 24 is configured to capture an image 1, whose outline is marked by a dashed line. The image 1 covers a part of the object 20 containing a first marker 11. By moving the camera 24 appropriately (in particular vertically downwards in figure 1), further images 2-4 can be captured whose outlines are again marked by dashed lines. The sizes of the images 1-4 may vary depending on a distance between the camera 24 and the object 20 and/or by a chosen image size or image segment. Much like the number and positioning of the markers 10-15, the number, sizes and positions of the images 1-4 is only described herein by way of example.

In the depicted example, a first image 1 contains a first marker 11 as well as a second marker 12. As will be discussed below, the first marker 11 acts a reference for determining a relative pose and, preferably, for determining coordinates of the second marker 12.

A second image 2 contains the second marker 12 as well as a third marker 13. In this case, the second marker 12 acts as a reference for said third marker 13 in the manner explained above.

A third image 3 contains the third marker 13 as well as a fourth and fifth marker 14, 15. The third marker 13 acts as a reference for said further markers 14, 15.

A fourth image 4 contains the fourth marker 14 acting as a reference for the sixth marker 16 which is equally contained in said image 4.

The exemplary arrangement of single images 1-4 illustrates that all markers 11-16 are contained in at least one image 1-4. Markers 11-16 acting as a reference for other markers 11-16 (which applies in the given example to all markers 11-14 except for the fifth and sixth markers 15, 16), are contained in at least two images 1-4.

Overall, a multitude of images 1-4 of the object 20 is thus captured. While it is theoretically conceivable to capture the object 20 with only one image (e.g. when positioning the image acquisition device 22 in a sufficiently large distance from the object 20), the low resulting image resolution would impair the quality of the subsequent image analysis and in particular the precision of any coordinate measurements. Yet, with the present solution, it is possible to capture the object 20 with a multitude of single images 1-4 with a sufficiently high resolution, wherein said images 1-4 can be linked to one another by using selected ones of the markers 11-16 as references for others.

This latter aspect as well as the general operation of the system 10 will be discussed in the following in conjunction with the flow diagram of figure 2. The steps of said flow diagram do not represent a mandatory sequence or a fixed order in time. They could e.g. be performed in a different order and/or partially simultaneously, if not mentioned or evident otherwise.

In a first step S1, the camera 24 is arranged relative to the object 20, so as to capture the first image 1. The generated image file is transferred to the computing unit 30.

By way of standard image analysis algorithms performed by the computing unit 30 (e.g. pattern matching), the computing unit 30 is configured to detect the first marker 11 in said image 1. This is performed in step S2. Furthermore, e.g. based on detecting a characteristic feature and in particular the ellipse parameters disclosed in EP 3 594 903 A1, the computing unit 30 determines coordinates and, more precisely, a full 6-DOF pose (i.e. all three translational and rotational degrees of freedom) of the marker 1. This includes determining coordinates of its center point as well as an orientation of two axes defining a plane in which the two dimensional marker extends. Note that said coordinates or pose are defined in a camera coordinate system and do not represent absolute values e.g. with respect to a global absolute coordinate system.

If the camera 24 remained stationary, a coordinate system of the camera 24 (which e.g. has a fixed relation to the image plane of captured images) could have a defined relation to an absolute coordinate system of interest. In this case, the 6-DOF of any of the markers 11-16 could be easily transformed into respective marker coordinates in said absolute coordinate system.

Yet, in the given case, the camera 24 is movable, thereby continuously altering a position of its camera coordinate system with respect to a preferably stationary target coordinate system.

The disclosed example overcomes this issue by including selected markers 11-16 in multiple images 1-4 and using them as a reference for determining coordinates preferably with respect to a common (reference) coordinate system. In the following, said reference coordinate system is associated with the first marker 11. Other examples of defining reference coordinate systems are discussed further below.

Accordingly, in step S3, a three-dimensional reference coordinate system (see Fig. 1) is defined so that its origin coincides with the center point of the first marker 11 and two axes thereof coincide with the marker's two axes mentioned above. Different relative arrangements of the reference coordinate system with respect to the marker 11 (e.g. a translational or rotational offset) are possible as well, as long as it is sufficiently defined.

In step S4, the second marker 12 is identified. Following that, its relative arrangement to the first marker 11 is determined with respect to all six degrees of freedom. As the reference coordinate system is centered with respect to the second marker 12, this is equivalent to determining an arrangement (i.e. pose) of the second marker 12 in the reference coordinate system. Note that this relative arrangement is represented by a six-dimensional vector V1 in figure 1 and is stored in a memory of the computing unit 30. Specifically, the pose of a non depicted three dimensional coordinate system encoded by the second marker 12 may be determined. Said pose may be determined with respect to the reference coordinate system. The six-dimensional vector V1 may thus include the threedimensional position of the origin of the second marker's 12 coordinate system as well as the rotation of its axes compared to the reference coordinate system.

In step S5, the second picture 2 is captured after having moved and arranged the camera 24 appropriately. In said second picture 2, the second as well as third marker 12 and 13 are identified. Note that the first marker 11 is not included in said second picture 2. Accordingly, a pose of the third marker 13 with respect to the reference coordinate system cannot be directly determined based on said second picture 2.

Instead, a relative arrangement of the third marker 13 and the second marker 12 is determined. This is done by determining a relative shift and rotation between the (non-depicted) coordinate systems of (i.e. encoded by) the second marker 12 and the third marker 13. The result is again depicted as a vector V2. Similar to vector V1, it may express the origin-coordinates of the third marker's 13 coordinate system in the coordinate system of the second marker 12 as well as the relative rotation between said coordinate systems.

By way of said vector V2, a link is established between the third marker 13 and the reference coordinate system centered at the first marker 11. For example, by adding the vectors V1 and V2, a 6-DOF pose of the marker 13 in said reference coordinate system can be determined. For doing so, appropriate coordinate transformations may be performed given that the vector V2 is defined in the coordinate system of the second marker 12 and vector V1 is defined in the reference coordinate system. This transformation is, however, of low complexity as the relative poses of the coordinate systems of the first and second markers 11, 12 are known, e.g. in form of the vector V1.

Accordingly, due to the identified relative arrangements and in particular the vectors V1, V2, the third marker 13 is at least indirectly linked (via the relative arrangement to the second marker 12) to the first marker 11 and thus to the reference coordinate system. Differently put, a (vector) chain or (vector) sequence is established, linking the third marker 13 to the fist marker 11. Therefore, the third marker's 13 6-DOF-pose in the reference coordinate system is at least indirectly defined or can at least be computed indirectly.

Contrary to the illustration of Fig. 1, it is rather unlikely that the second marker 12 will be positioned similarly in the subsequently taken pictures 1 and 2. Rather, with respect to a camera coordinate system and due to movements of the camera 24 in between taking pictures 1 and 2, the second marker 12 will appear at different positions within an image plane of said pictures 1, 2. However, since only relative poses of the second marker 12 to other markers 11-16 are considered, this is without relevance to the accuracy of the present solution.

To improve the measurement accuracy, more than one marker 11-16 can be contained in a preceding as well as subsequent image. Differently put, more than one marker 11-16 can act as reference and can be contained in two images that are preferably captured subsequently to one another. For example, in case of Fig. 1 a further optional marker 12a may be present in the first and the second picture 1, 2. The relative pose of this optional marker 12a (and in particular of the coordinate system encoded therein) to the first marker 11 (and in particular to its reference coordinate system) may be expressed by a six dimensional vector V1a.

The third marker's coordinates may be determined in the coordinate system of the optional marker 12a as well. This way, the third marker's 13 6-DOF in the reference coordinate system may be determined by combining vectors V1 and V2 in the manner explained above as well as combining vectors V1a and V2a along with any coordinate transformation needed for doing so. Differently put, the third marker's 13 6-DOF may be determined redundantly due to the presence of multiple markers 12, 12a acting as references.

This can be used to perform a plausibility check with respect to the determined 6-DOF. In case a deviation from the redundantly determined 6-DOF exceeds a defined threshold, the measurement may be considered inconclusive and may have to be repeated. Additionally or alternatively, the redundantly determined 6-DOF may be used to calculate median or average values of the 6-DOF third marker 13 to improve the accuracy.

In both cases, the impacts of an inaccurate determination of the 6-DOF of a single marker 11-16 that is used as a reference for determining degrees of freedom of further markers 11-16 can be limited. For example, the risk of a single inaccurate 6-DOF determination of a reference marker being fully added to and included in the 6-DOF determination of subsequent markers 11-16 can thus be limited.

In step S6, the third picture 3 is captured after having moved and arranged the camera 24 accordingly. In said third picture 3, the third to fifth marker 13-15 are identified. Neither the first nor the second marker 11, 12 are included in said third picture 3.

Instead, a relative arrangement of the third marker 13 and the fourth marker 14 is determined (i.e. the 6-DOF of the fourth marker's 14 coordinate system are determined with respect to the third marker's 13 coordinate system). More precisely, this is done by determining a relative shift and rotation between the (non-depicted) coordinate systems of (i.e. encoded by) said markers 13, 14. The result is again depicted as a vector V3. Similarly, a relative arrangement of the third marker 13 and the fifth marker 15 is determined, resulting in the vector V4.

Both markers 14, 15 are thus again indirectly linked to the reference coordinate system. This could equally be achieved by e.g. determining the relative arrangement of the fifth marker 15 to the fourth marker 14, whose relative pose or link to the third marker 13 has already been established.

In step S7, the fourth picture 4 is captured. It contains the fourth and sixth markers 14, 16 and none of the other markers 11-13, 15. Similar to above, a relative 6-DOF-pose of the markers 14, 16 is determined, resulting in the vector V5.

As a result of the above steps, each marker 11-16 is at least indirectly linked to the reference coordinate system by way of the vectors V1-V5. Although these vectors V1-V5 are determined in various marker-specific coordinate systems, transforming them into the reference coordinate system is straightforward. This is because the vectors V1-V5 contain the information of how the markers 11-16 and specifically the respective coordinate systems encoded therein are positioned and oriented relative to one another. Such a conversion of coordinate systems can be accomplished by a standard transformation. For mathematical modeling, e.g. Matrix notation can be used (matrix transformation). Therefore, for each marker 11-16, coordinates and in particular the 6-DOF-pose with respect to said reference coordinate system can be determined.

This also allows for determining test parameters of interest, such as a pose of defined planes of the object 20, a distance of such planes, an angle therebetween or a parallelism thereof. In general, from coordinate measurements of industrial workpieces, it is known to infer on such geometric characteristics or generally on test parameters from capturing a plurality of single point coordinates of an object. For example, by capturing three point coordinates, a plane can be defined. Presently, such point coordinates can be derived by way of determining the coordinates of the markers 11-16 with respect to the common reference coordinate system. Of course, these coordinates could also be transformed into another target coordinate system of interest.

As an alternative to centering the reference coordinate system at the first marker 11, figure 1 also depicts a global absolute reference G which may be a marker similar to markers 11-16. Said reference G represents an origin of an absolute or global reference coordinate system 36, that e.g. has a known pose with respect to a horizontal ground plane on which the object 20 stands.

As indicated by a respective dashed outline, in this case a picture 8 can be taken (e.g. as a first picture) containing the global absolute reference G and one of the markers 11-16. Merely by way of example, the sixth marker 16 is included in said picture eight. Following that, a relative arrangement between the marker 16 and the reference G can be determined and e.g. expressed as a respective vector VG.

Thereby, an absolute position of the marker 16 in the global reference coordinate system 36 of interest can be determined. Said marker 16 can then be used as an initial reference for determining relative arrangements of the further markers 11-15 by capturing a multitude of images as explained above. Differently put, the marker 16 can take over the role of the first marker 11 as previously explained with respect to the flow diagram of figure 2.

As another non-depicted example, the disclosed solution may be implemented for producing large workpieces, such as the welding of wind turbine elements. In this exemplary case, a marker is attached to the floor or to another nonmovable and stable feature of the surroundings. This marker forms a global reference system for all elements as well as for the complete technical construction, i.e. the welded workpiece. All markers that are applied to single elements that are to be welded together are in a relationship to the global marker. Their (local) coordinate systems can be converted into the global reference system using a coordinate transformation. This way, it can be checked after welding, whether the single elements are correctly positioned and/or whether the overall welded workpieces match desired geometric characteristics.

As a further alternative, a reference coordinate system could also be centered at or associated with the camera 24. In this case, the position of the camera 24 when taking the first picture 1 can define a position of said reference coordinate system and specifically of its origin. For example, in the first picture 1, markers 11 and 12 are pictured together. The 6-DOF of the coordinate systems encoded by both markers 11, 12 can be determined with respect to a reference camera coordinate system. Techniques for determining the 6-DOF of a marker 11, 12 are disclosed in the prior references previously discussed. Preferably, at least two markers are captured with one camera for high 6-DOF determination stability. Alternatively, two cameras can be used to e.g. capture one common marker.

In the second picture 2, the second marker 12 is included again. This time, however, it may assume a different position/orientation in the reference camera coordinate system. The difference between the poses of said second marker 12 in the first and second pictures 1,2 is equivalent to a 6-DOF movement of the camera 24. This difference may be expressed similarly to vector V1 of Fig. 1 and may be used to transform the 6-DOF of the second marker 12 into the camera's coordinate system associated with picture 1 and preferably acting as a common reference for all 6-DOF-marker-coordinates.

Note that labelling the images 1-4 and structures 11-16 as first to fourth and first to sixth, respectively, is merely done by way of example and without any limiting effect. For example, image 2 may be first image and image 3 may be a second image in the sense of the claims. Likewise, structure 12 may be a first structure in the sense of the claims and structure 13 and one of structure 14 or 15 may be the claimed second and third structures.

## Claims

1. Method for capturing optically detectable structures (11-16) which are spatially separated from one another, comprising:
a) determining a relative arrangement of a second structure (12) to a first structure (11) based on a first image (1) depicting the first structure (11) and the second structure (12);
b) determining coordinates of the second structure (12) based on said relative arrangement;
c) capturing a second image (2) depicting the second structure (12) and a third structure (13), but not the first structure (11);
d) determining a relative arrangement of said third structure (13) to the second structure (12) based on said second image (2);
e) determining coordinates of the third structure (13) based on said relative arrangement.

2. Method according to claim 1,
**characterized by**:
- capturing further images (3-4), each image (3-4) depicting at least one structure (13) whose relative arrangement to the first structure (11) is at least indirectly defined as well as depicting at least one other structure (14, 15);
- determining a relative arrangement of said other structure (14, 15) to said at least one structure (13);
- determining coordinates of the other structure (14, 15) based on said relative arrangement.

3. Method according to any of the previous claims,
**characterized by** at least the coordinates of the first structure (11) being determined in or at least indirectly defined with respect to a predetermined reference coordinate system (36).

4. Method according to claim 3,
**characterized by** the reference coordinate system (36) being one of the following:
- a coordinate system associated with the first structure (11);
- a coordinate system associated with an image capturing system (22) used for capturing the images (1-4);
- a coordinate system associated with an optically detectable reference structure (G), wherein an image is captured depicting said reference structure (G) and the first structure (11) for determining the coordinates of the first structure (11) in the reference coordinate system (36).

5. Method according to any of the previous claims,
**characterized by** providing an image capturing system (22) with at least one image capturing device (24) that is movable relative to the optically detectable structures (11-16).

6. Method according to claim 5,
**characterized by** arranging the image capturing device (24) and the spatially separated optically detectable structures (11-16) relative to one another, such that not all structures (11-16) can be captured with a single image (1-4); and
moving the image capturing device (24) relative to the optically detectable structures (11-16), thereby capturing a plurality of images (1-4), so that each structure (11-16) is depicted in at least one image (1-4).

7. Method according to claim 6,
**characterized by** depicting in at least two images each or at least the majority of structures (11-16) that are used as a reference for determining an arrangement of any further structure (11-16) relative thereto.

8. Method according to any of the previous claims,
**characterized by** capturing an additional marker (12a) with the first image (1), determining an arrangement of the third marker (13) also relative to said additional marker (12a) and also determine coordinates of said third marker (13) based on this relative arrangement.

9. System (10) for capturing optically detectable structures (11-16),
the system (10) comprising:
- an arrangement of spatially separated optically detectable structures (11-16);
- an image capturing system (22) that is configured to capture a first image (1) of the arrangement depicting a first structure (11) and at least a second structure (12) and to capture a second image (2) depicting the second structure (11) and a third structure (13), but not the first structure (11);
- a computing unit (30) configured to determine a relative arrangement of said second structure (12) to a first structure (11) based on said first image (1) and further configured to determine coordinates of the second structure (12) based on said relative arrangement;
- the computing unit (30) also being configured to determine a relative arrangement of said third structure (13) to the second structure (12) based on said further image (2) and to determine coordinates of the third structure (13) based on said relative arrangement.

10. System according to claim 9,
**characterized by**:
- the image capturing system (22) being configured to capture further images (3-4), each image (3-4) depicting at least one further structure (14) whose relative arrangement to the first structure (11) is at least indirectly defined as well as depicting at least one other structure (15, 16);
- the computing unit (30) being configured to determine a relative arrangement of said other structure (15, 16) to said further structure (14) and to determine coordinates of the other structure (15, 16) based on said relative arrangement.

11. System according to any of claims 9 or 10,
**characterized by** at least the coordinates of the first structure (11) being determined in a predetermined reference coordinate system (36), and preferably further **characterized by** the reference coordinate system (36) being one of the following:
- a coordinate system associated with the first structure (11);
- a coordinate system associated with an image capturing system (22) used for capturing the images (1-4);
- a coordinate system associated with an optically detectable reference structure (G), wherein an image is captured depicting said reference structure (G) and the first structure (11) for determining the coordinates of the first structure (11) in the reference coordinate system (36).

12. System according to any of claims 9 to 11,
**characterized by** the image capturing system (22) having at least one image capturing device (24) that is movable relative to the optically detectable structures (11-16).

13. System according to claim 12,
**characterized by** the image capturing device (24) and the spatially separated optically detectable structures (11-16) being arrangeable relative to one another, such that not all structures (11-16) can be captured with a single image (1-4); and
the image capturing device (24) being movable relative to the optically detectable structures (11-16), thereby being configured to capture a plurality of images (1-4), so that each structure (11-16) is depicted in at least one image (1-4).

14. System according to claim 13,
**characterized in that** each or at least the majority of structures (11-16) that are used as a reference for determining an arrangement of any further structure (11-16) relative thereto are depicted in at least two images.

15. System according to any of claims 9 to 14,
**characterized by** the image capturing system (22) being configured to capture an additional marker (12a) with the first image (1), and
the computing unit (30) being configured to determine an arrangement of the third marker (13) also relative to said additional marker (12a) and to also determine coordinates of said third marker (13) based on said relative arrangement.
